# EUROPÄISCHE PATENTSCHRIFT

(11) **EP 1 190 114 B1**
(45) Veröffentlichungstag und Bekanntmachung des Hinweises auf die Patenterteilung: **17.03.2004**
(21) Anmeldenummer: 00934961.4
(22) Anmeldetag: 25.04.2000
(51) Int. Cl.: C25B 1/00, H01M 4/52

(54) **VERFAHREN ZUR HERSTELLUNG VON NICKELHYDROXIDEN**
METHOD FOR PRODUCING NICKEL HYDROXIDES
PROCEDE POUR PRODUIRE DES HYDROXYDES DE NICKEL

(30) Priorität: 07.05.1999 DE 19921313
(43) Veröffentlichungstag der Anmeldung: 27.03.2002
(73) Patentinhaber: H.C. Starck GmbH & Co. KG, 38642 Goslar (DE)
(72) Erfinder: OLBRICH, Armin, D-38723 Seesen (DE); STOLLER, Viktor, D-38667 Bad Harzburg (DE); MEESE-MARKTSCHEFFEL, Juliane, D-38640 Goslar (DE); SCHRUMPF, Frank, D-38640 Goslar (DE); SCHMOLL, Josef, D-38642 Goslar (DE); GILLE, Gerhard, D-38640 Goslar (DE)
(74) Vertreter: Zobel, Manfred, Dr.
(86) Internationale Anmeldenummer: PCT/EP2000/003684
(87) Internationale Veröffentlichungsnummer: WO 2000/068462

(56) Entgegenhaltungen:
- WO-A-95/33084
- CHEMICAL ABSTRACTS, vol. 132, no. 20, 15. Mai 2000 (2000-05-15) Columbus, Ohio, US; abstract no. 270972, YANG, CHANGCHUN ET AL: "Preparation of nickel hydroxide by electrolysis" XP002149887 & CN 1 210 153 A (ZHENGZHOU UNIVERSITY, PEOP. REP. CHINA) 10. März 1999 (1999-03-10)

## Beschreibung

Die vorliegende Erfindung betrifft ein Verfahren zur Herstellung von Nickelhydroxiden durch anodische Auflösung von Nickelmetall in einer Elektrolysezelle bei vollständig durchmischter Elektrolysesole.

Für die Herstellung von Nickelhydroxiden sind insbesondere zwei Verfahren bekannt, nämlich die chemische Fällung der Hydroxide aus Nickelsalzlösungen durch Zugabe von Alkalilaugen und andererseits die anodische Auflösung von Nickel in einer Elektrolysezelle, wobei an der Kathode unter Bereitstellung der entsprechenden Hydroxidionen Wasserstoff freigesetzt wird.

Der chemische Fällungsprozeß hat den Nachteil, daß die aufgrund der Neutralisationsreaktion stöchiometrisch anfallenden Neutralsalze entsorgt oder aufgearbeitet werden müssen. Dagegen gelingt es bei elektrolytischen Prozessen weitgehend, die Leitsalz-haltige Sole nach Abtrennung des gefällten Hydroxides im Kreislauf zu fahren, so daß der Anfall von Neben- und Abfallprodukten weitgehend vermieden werden kann. Zumindest theoretisch sollten elektrolytische Prozesse aufgrund der geringeren Konzentrationen der Reaktionspartner in der Fällungssuspension (Elektrolysesole) zu gleichmäßigeren Produkten führen. Dem steht allerdings die Tendenz zur Ausbildung von anodischen und/oder kathodischen Ablagerungen bzw. Ablagerungen auf gegebenenfalls vorhandenen Diaphragmen oder Membranen aufgrund der an den jeweiligen Grenzschichten stark abweichenden Konzentrationen, Potentialund/oder pH-Werten entgegen, so daß die Einstellung und Aufrechterhaltung von im Hinblick auf die Produkteigenschaften optimalen Prozeßbedingungen behindert ist, bzw. die Elektrolyse gar nicht erst im Gleichgewicht betrieben werden kann.

Es ist ferner, beispielsweise aus der japanischen Offenlegungsschrift 56-143 671 vom 9. November 1981, bekannt, zur Herstellung dichterer Nickelhydroxidpulver die chemische Fällung aus wäßrigen Lösungen von Nickel-Ammin-Komplexsalzen vorzunehmen, aus denen Nickelhydroxid mit erheblich reduzierter Fällungsgeschwindigkeit ausfällt, so daß sich eine dichtere Partikelstruktur ausbildet. Ferner wird durch das aufgrund der Gegenwart von Ammoniak in der Fällungslösung veränderte Kristallisations-/Lösungsgleichgewicht die Ausbildung sphäroidischer Agglomerate begünstigt.

Wird der Komplexbildner bei dem elektrolytischen Prozeß eingesetzt, kann es zur Störung des Prozesses kommen, da Ni(II) in Ni(II)-Amminkomplexen leichter kathodisch reduziert wird als im Ni(II)-Hexaquokomplexion. Das abgeschiedene Ni bildet lockere Ablagerungen auf der Kathode. Dem wird gemäß EP-A-684 324 dadurch entgegengewirkt, daß die Elektrolysezelle mittels einer Hydroxidionendurchlässigen Membran in einen Anoden- und einen Kathodenraum aufgeteilt wird. Zur Vermeidung von Nickelhydroxid-Ablagerungen sowohl an der Membran als auch an der Anode ist es dabei erforderlich, sehr hohe Ammoniakkonzentrationen einzusetzen, so daß die Hydroxidausfällung erst außerhalb des Reaktors unter Temperaturerhöhung erfolgt. Nachteilig an dem Membran-Elektrolyse-Verfahren ist die durch die Membran bedingte erhöhte Elektrolysespannung, sowie der Einsatz der Membran selbst, der technologisch diffizil (Verstopfungsprobleme) ist, die Verfahrenskosten erhöht und damit kommerzielle Anwendungen erschwert.

Es wurde nun gefunden, daß die Erzeugung von sphärischem Nickelhydroxid durch anodische Auflösung von Nickel direkt in einer vollständig durchmischten Elektrolysezelle gelingt, wenn die Elektrolysesole vergleichsweise niedrige Ammoniakgehalte von 1 bis 5 g/l aufweist und ferner der Chloridionengehalt, der pH-Wert und die Temperatur der Sole in bestimmten Grenzen gehalten werden.

Für das erfindungsgemäße Verfahren wesentlich scheint zu sein, daß sich auf der Anode ein quasi stationärer Niederschlag von basischem Nickelsalz ausbildet, der offenbar die Funktion einer Kationenaustauschermembran übernimmt, d.h. für Chlorid- und Hydroxyid-Ionen undurchlässig ist. Die anodisch aufgelösten Nickelionen treffen von der Anodenseite her auf die Ablagerung und werden dort als basisches Nickelchlorid eingebaut. Von der Elektrolytseite her werden offenbar Nickel-Ammonium-Komplexe, die weniger als 4 Liganden aufweisen und daher relativ instabil sind, abgelöst. Dabei scheint die Amminkomplex-Bildung durch eine elektrolytseitig an der "Membran" sich ausbildenden, im Vergleich zur Solekonzentration OH-Ionen-armen Grenzschicht begünstigt. Nach Verlassen der OH-Ionen-armen Grenzschicht zerfallen die Amminkomplexe, bevor es zur Nickelabscheidung an der Kathode kommt.

Gegenstand der vorliegenden Erfindung ist demgemäß ein Verfahren zur Herstellung von sphärischem Nickelhydroxid durch anodische Auflösung einer Nickelelektrode und Fällung von Nickelhydroxid in einer vollständig durchmischten Elektrolysezelle, das dadurch gekennzeichnet ist, daß eine Elektrolysesole mit einem Gehalt von 20 bis 50 g/l Chloridionen und 1 bis 7 g/l Ammoniak, einem pH-Wert von 9,5 bis 11,5 und einer Temperatur von 45 bis 60°C eingesetzt wird, wobei die Elektrolyse sole durch die Elektrolysezelle umgepumpt wird. Vorzugsweise soll das molare Verhältnis von Chloridionen zu Ammoniak 2 bis 10 betragen.

Zur Dotierung des Produktes mit Sulfat kann dem Elektrolyten zusätzlich Natriumsulfat zugesetzt werden.

Vorzugsweise weist die Elektrolysesole einen pH-Wert von unter 11, insbesondere bevorzugt zwischen 10 und 10,5 (bei Reaktionstemperatur) auf. Die Chloridionen-Konzentration wird durch eine wäßrige Lösung von Alkalichloriden bereitgestellt. Die pH-Wert-Einstellung erfolgt durch Dosierung einer Alkalihydroxid-Lösung bzw. Salzsäure in Abhängigkeit von einer kontinuierlichen pH-Wert-Messung.

Erfindungsgemäß wird unter einer "vollständig durchmischten Elektrolysezelle" eine einheitliche Elektrolysezelle verstanden, in der Anode und Kathode in Kontakt mit im wesentlichen derselben Sole stehen, d.h. in der keine bauartbedingte Auftrennung des Zellraumes in einen Anoden- und einen Kathodenraum durch Diaphragmen oder Membranen erfolgt. Dabei bleibt die in situ gebildete Membranfunktion der Ablagerungen von basischem Nickelsalz außer Betracht. "Vollständig durchmischt" schließt erfindungsgemäß ferner ein, daß die Sole selbst mit Ausnahme von Grenzschicht-Effekten in der Nähe der Anodenflächen eine gleichmäßige Zusammensetzung aufweist, was durch eine turbulente Durchmischung sichergestellt wird. Dies wird dadurch erreicht, daß der Elektrolysezelle ständig über ein außerhalb der Zelle angeordnetes Rohrleitungssystem, das eine Pumpe enthält, Sole entzogen und diese wieder in die Zelle zurückgeführt wird, d.h. die Sole wird durch die Elektrolysezelle umgepumpt. Die Umpumpgeschwindigkeit der Sole beträgt vorzugsweise mindestens das 100-fache des Füllvolumens der Zelle, insbesondere bevorzugt mehr als das 200-fache und besonders bevorzugt das 400- bis 1000-fache des Füllvolumens der Elektrolysezelle. Durch die hohe Umpumpgeschwindigkeit von mindestens 20 cm/s in der Zelle wird gewährleistet, daß in der Elektrolysezelle dieselben Soleparameter herrschen, wie im Umpumpkreislauf außerhalb der Zelle. Insbesondere wird durch die hohe Umpumpgeschwindigkeit gewährleistet, daß der Temperaturanstieg in der Sole beim einmaligen Durchgang minimal ist. Die Temperaturregelung erfolgt durch einen im Umpumpkreislauf außerhalb der Zelle vorgesehenen Wärmeaustauscher.

Als Nebenprodukt des Verfahrens entsteht kathodisch abgeschiedener Wasserstoff, der oberhalb der Sole aus der Zelle abgezogen wird. Die dispergierten Wasserstoffbläschen sorgen zusätzlich für eine turbulente Vermischung der Sole.

Die mittlere Verweilzeit der Sole beträgt vorzugsweise 3 bis 5 Stunden, d.h. es werden stündlich jeweils 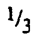 bis 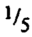 des Füllvolumens der Zelle aus dem Umpumpkreislauf ausgeschleust, die Nickelhydroxidteilchen von der ausgeschleusten Sole abgetrennt und die Sole in den Umpumpkreislauf zurückgeführt.

Die Abtrennung der Nickelhydroxidteilchen kann durch Filtration oder unter Einsatz von Zentrifugalkräften z.B. in einer Dekanterzentrifuge erfolgen. Das abgetrennte Nickelhydroxid wird anschließend zunächst mit VE-Wasser, anschließend mit verdünnter, z.B. 1-molarer, Natronlauge und danach erneut mit VE-Wasser gewaschen und danach getrocknet.

Die elektrolytische Auflösung von Nickel wird vorzugsweise bei einer Stromdichte von 500 bis 2000 A/m² durchgeführt. Die erforderliche Spannung beträgt je nach Elektrodenabstand 2,2 bis 4 Volt. Es wird eine anodische Faraday'sche Stromausbeute von mehr als 98 % erzielt.

Für den Einsatz in wiederaufladbaren alkalischen Batterien wird bevorzugt dotiertes Nickelhydroxid hergestellt. Als Dotierungselemente kommen insbesondere Kobalt, Zink, Cadmium, Magnesium, Aluminium, Kupfer, Chrom, Eisen, Scandium, Yttrium, Lanthan, Lanthanoide, Bor, Gallium oder Mangan in Frage. Die Dotierelemente werden bevorzugt in Form ihrer wäßrigen Chloride kontinuierlich vorzugsweise in den Umpumpkreislauf außerhalb der Zelle eingespeist, und zwar in einem solchen Mengenverhältnis zu dem elektrolytisch aufgelösten Nickel, das der späteren Dotiermenge entspricht. Ferner ist es notwendig, zur Aufrechterhaltung des Ammoniak/Chlorid-Verhältnisses gleichzeitig eine entsprechende Menge Ammoniak einzuleiten. Über die pH-Wert-Regelung wird entsprechend Natronlauge bzw. Salzsäure zugeführt. Bei dem beschriebenen Verfahren zur Herstellung dotierter Nickelhydroxide fallen demgemäß Neutralsalze im wesentlichen nur in stöchiometrischen Mengen entsprechend den Mengen der Dotierung an. Durch Zusatzanoden aus den Dotierungsmetallen oder durch Vorlegierung der Nickelanode mit den Dotierungselementen kann auch dieser Neutralsalzanfall vermieden werden.

Nach einer weiteren Ausführungsform der Erfindung werden dotierte Nickelhydroxide dadurch hergestellt, daß mit den Dotierungselementen legierte Nickel-Anoden eingesetzt werden.

Nach einer weiteren Ausführungsform der Erfindung werden mit Kobalthydroxid beschichtete Nickelhydroxide hergestellt. Hierzu wird vorzugsweise die aus dem Umpumpkreislauf der Elektrolysezelle ausgeschleuste Nickelhydroxid enthaltende Sole einer weiteren Elektrolysezelle zugeführt, deren Anode aus Kobalt besteht. Diese nachgeschaltete Elektrolysezelle, in der die Beschichtung des Nickelhydroxids mit Kobalt(II)hydroxid erfolgt, wird unter im wesentlichen gleichen Bedingungen betrieben wie die vorgeschaltete Elektrolysezelle zur Erzeugung von Nickelhydroxid. Dabei wird das Verhältnis der Anodenflächen (bei gleicher Stromdichte) so gewählt, daß das gewünschte molare Verhältnis von Nickelhydroxid-Kem und Kobalthydroxid-Beschichtung hergestellt wird. Nach Abtrennung der mit Kobalthydroxid beschichteten Nickelhydroxid-Teilchen enthaltenden Sole aus dem Umpumpkreislauf der nachgeschalteten Elektrolysezelle mit Kobalt-Anode und weiterer Abtrennung der Feststoffteilchen von der Sole wird die Sole in den ersten Umpumpkreislauf zur Erzeugung des Nickelhydroxids zurückgeführt.

Nach einer weiter bevorzugten Ausführungsform der Erfindung wird das Nickelhydroxid aus dem Umpumpkreislauf der ersten Elektrolysezelle mittels einer Zentrifuge verdichtet ausgetragen, wobei kleinere Nickelhydroxid-Kristalle in der zurückgeführten Sole verbleiben und in die erste Elektrolysezelle zurückgeführt werden. Die verdichtete Suspension mit Nickelhydroxid-Teilchen wird dem im wesentlichen getrennten Umpumpkreislauf der nachgeschalteten Elektrolysezelle mit Kobalt-Elektrode zugeführt. Auf diese Weise gelingt es, besonders gleichmäßige Nickelhydroxid-Teilchen zu erzeugen.

Die Erfindung wird nachfolgend anhand der Figuren 1 bis 4 näher erläutert:
- Figur 1: zeigt eine erste Ausführungsform der Erfindung zur Herstellung von dotiertem oder undotiertem Nickelhydroxid.
- Figur 2: zeigt eine erfindungsgemäße Vorrichtung zur Herstellung von mit Kobalthydroxid beschichtetem Nickelhydroxid.
- Figur 3: zeigt eine erfindungsgemäße Vorrichtung zur Herstellung von beschichtetem Nickelhydroxid mit besonders gleichmäßiger Teilchengrößenverteilung.
- Figur 4: zeigt eine REM-Aufnahme des gemäß Beispiel erzeugten Nickelhydroxids.

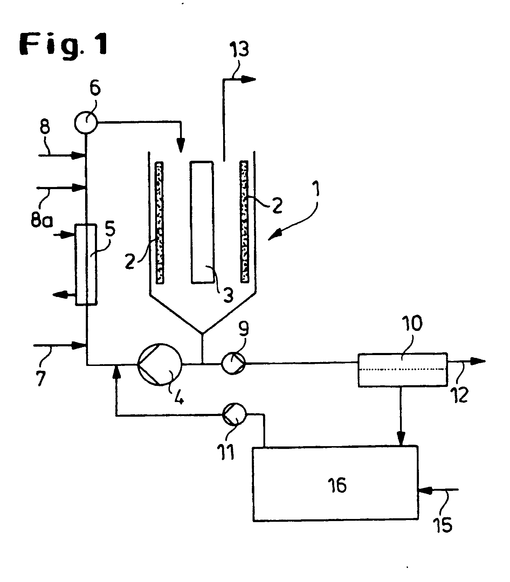

Figur 1 zeigt eine Elektrolysezelle 1, die eine Kathode 2 und eine Anode 3 enthält. Die Elektrolysesole wird im Boden der Zelle 1 über die Pumpe 4, den Wärmeaustauscher 5 sowie die pH-Sonde 6 umgepumpt. In den Umpumpkreislauf wird, wie durch Pfeil 7 angedeutet, in Abhängigkeit von der pH-Messung 6 Alkalihydroxid bzw. Salzsäure zudosiert. Aus dem Umpumpkreislauf wird mittels Pumpe 9 Nickelhydroxid-Suspension ausgeschleust und der Feststoffabtrennvorrichtung 10 zugeführt. Der Feststoff wird, wie durch Pfeil 12 angedeutet, ausgeschleust. Die von Feststoff befreite Sole wird über die Elektrolytaufarbeitung 16 gegebenenfalls unter Wasserzugabe 15 mittels Pumpe 11 in den Umpumpkreislauf zurückgeführt. Ferner ist, wie durch die Pfeile 8 angedeutet, eine Einleitmöglichkeit vorgesehen, durch die Ammoniak-Verluste substituiert werden können. Durch die Einleitung 8a können ferner Dotiersalzlösungen in den Umpumpkreislauf eingeleitet werden. Nach einer bevorzugten Ausführungsform ist die Abtrennvorrichtung 10 in Form einer Siebzentrifuge ausgebildet, die so gefahren wird, daß feinteilige Nickelhydroxid-Teilchen mit dem Filtrat über Pumpe 11 in den Umpumpkreislauf zurückgeführt werden. Während der Elektrolyse erzeugtes Wasserstoffgas wird oberhalb des Füllvolumens der Zelle, wie durch Pfeil 13 angedeutet, abgezogen.

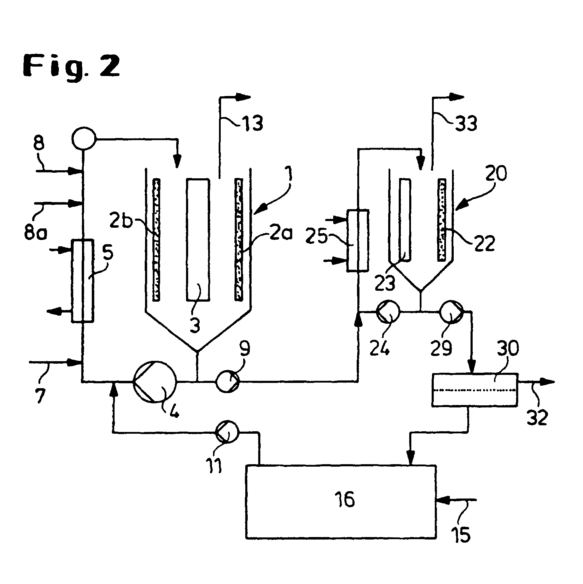

Figur 2 zeigt eine erste Elektrolysezelle 1 mit Nickelanode 3, wobei im übrigen gleiche Bezugszeichen die gleichen Elemente wie in Figur 1 bezeichnen. Der Elektrolysezelle 1 ist eine zweite Elektrolysezelle 20 mit Kobaltelektrode 23 nachgeschaltet. Die Sole wird entsprechend über Pumpe 24 und Wärmeaustauscher 25 umgepumpt. Dem Umpumpkreislauf wird die über Pumpe 9 aus dem Umpumpkreislauf der Elektrolysezelle 1 ausgeschleuste Nickelhydroxid-Suspension zugespeist. Eine entsprechende Menge an mit Kobalthydroxid beschichtetem Nickelhydroxid enthaltende Suspension wird über Pumpe 29 ausgeschleust und in die Abpumpvorrichtung 30 eingeleitet. Das Filtrat wird über Pumpe 11 in den Umpumpkreislauf der Elektrolysezelle 1 zurückgeführt. Der von der Sole abgetrennte Feststoff wird, wie durch Pfeil 32 angedeutet, ausgeschleust und der Waschung und Trocknung zugeführt.

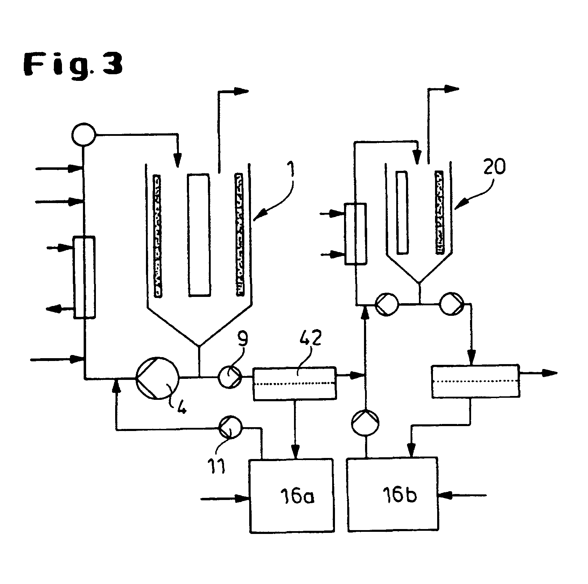

Figur 3 zeigt eine Ausführungsform der Erfindung wie in Figur 2, wobei jedoch eine zusätzliche Trennzentrifuge 42 vorgesehen ist, mittels der die Solekreisläufe der Elektrolysezellen 1 und 20 getrennt werden, wobei nur die mit der Trennzentrifuge 42 abgetrennten größeren Nickelhydroxid-Partikel in den Umpumpkreislauf der Elektrolysezelle 20 überführt werden und kleinere Nickelhydroxid-Teilchen über die Sole der Zirkulationspumpe 11 in die Elektrolysezelle 1 zurückgeführt werden.

### Beispiel

Es wird eine Versuchsanordnung gemäß Figur 1 eingesetzt. Elektrolysezelle 1 hat ein Fassungsvolumen von 2,3 l und ist mit einer Nickelanode und einer Nickelkathode mit je 400 cm² Elektrodenfläche ausgerüstet. Die im Umpumpkreislauf umgepumpte Sole weist einen Gehalt von 44,6 g/l Natriumchlorid und 2,6 g/l Ammoniak auf. Über Zulauf 8a werden stündlich 48 g einer wässrigen Dotierungslösung enthaltend 34 g/l Kobalt und 51,5 g/l Zink in Form ihrer Chloride eingespeist. Über Zulauf 7 wird zur Einstellung des pH-Wertes auf 10,3 l-molare Natronlauge bei einer Sole-Temperatur von 55°C zugespeist. Zur Aufrechterhaltung der stationären NH₃-Konzentration werden über Zulauf 8 ca. 10 ml/h NH₃-Lösung (50 g NH₃/l) eingespeist. Die Stromdichte in der Elektrolysezelle beträgt 1000 A/m². Es werden stündlich 43,8 g Nickel anodisch oxidiert. Die Spannung zwischen den Elektroden beträgt ca. 2 Volt. Das bei 12 ausgeschleuste Nickelhydroxid wird zuerst mit VE-Wasser, danach mit 1-molarer Natronlauge und anschließend erneut mit VE-Wasser gewaschen und im Umlufttrockenschrank bei einer Temperatur von 70°C getrocknet. Die Ausbeute beträgt stündlich 76 g.

Die Analyse ergibt ein Produkt mit 57,5 Gew.-% Nickel, 1,95 Gew.-% Kobalt, 2,94 Gew.-% Zink, 17 ppm Natrium, 300 ppm Chlor und einem Ammoniakgehalt von weniger als 40 ppm.

Die Klopfdichte des Produktes beträgt 2,1 g/cm³, die spezifische Oberfläche nach BET 15,6 m²/g und die mittlere Teilchengröße 3,1 µm (Mastersizer D50).

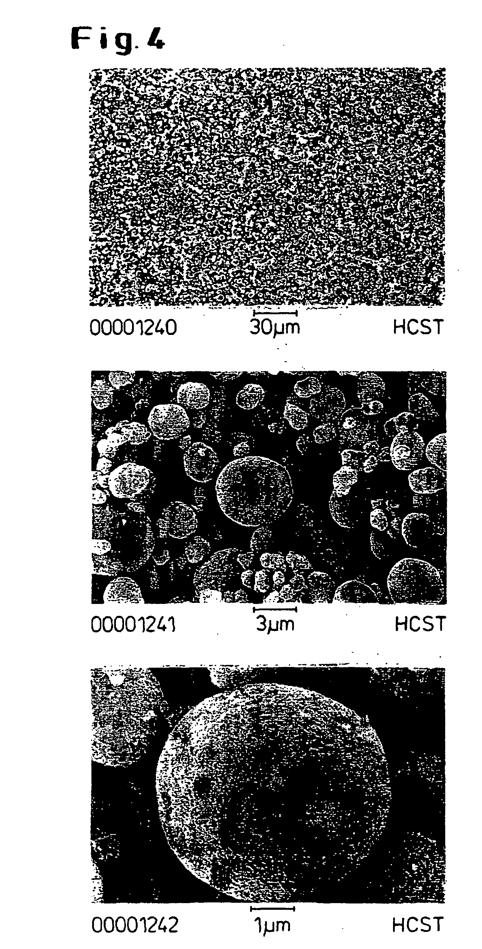

Figur 4 zeigt eine REM-Aufnahme des sphärischen Nickelhydroxids.

Die röntgenografisch bestimmte Kristallitgröße beträgt 69 Å, FWHM beträgt 0,92°2θ.

Der Batterietest nach AWTB/3. Entladezyklus ergibt eine spezifische Kapazität von 270 mAh, entsprechend einer Ni-EES(Ein-Elektronen-Schritt)-Ausnutzung von 103%.

## Patentansprüche

1. Verfahren zur Herstellung von sphärischem Nickelhydorixd durch anodische Auflösung einer Nickelelektrode und Fällung von Nickelhydroxid in einer vollständig durchmischten Elektrolysezelle, **dadurch gekennzeichnet, dass** eine Elektrolysesole mit einem Gehalt von 20 bis 50 g/l Chloridionen und 1 bis 7 g/l Ammoniak mit einem pH-Wert von 9,5 bis 11,5 und einer Temperatur von 45 bis 60°C eingesetzt wird, wobei die Elektrolysesole durch die Elektrolysezelle umgepumpt wird.

2. Verfahren nach Anspruch 1, **dadurch gekennzeichnet, dass** die Elektrolysesole vor der Einleitung in die Elektrolysezelle durch Zugabe von Alkalihydroxid bzw. Salzsäure auf einen pH-Wert von 10 bis 10,5 eingestellt wird.

3. Verfahren nach Anspruch 1 oder 2, **dadurch gekennzeichnet, dass** die Umwälzgeschwindigkeit der Sole mindestens 20 cm/s beträgt.

4. Verfahren nach einem der Ansprüche 1 bis 3, **dadurch gekennzeichnet, dass** das molare Verhältnis von Chloridionen zu Ammoniak 2 bis 10 beträgt.

5. Verfahren nach einem der Ansprüche 1 bis 4, **dadurch gekennzeichnet, dass** die mittlere Verweilzeit der Elektrolysesole in der Zelle 1 bis 5 Stunden beträgt.

6. Verfahren nach einem der Ansprüche 1 bis 5, **dadurch gekennzeichnet, dass** der Elektrolyse kontinuierlich ein oder mehrere Dotierungsmetallionen aus der Gruppe Co, Zn, Mg, Cu, Cr, Fe, Sc, Y, La, Lanthanoide, B, Ga, Mn, Cd und Al zugeführt werden.

7. Verfahren nach einem der Ansprüche 1 bis 6, **dadurch gekennzeichnet, dass** die Nickelhydroxidpulver dispergiert enthaltende Sole aus der Zelle ausgeschleust, das Nickelhydroxidpulver abgetrennt und die Sole in die Elektrolysezelle zurückgeführt wird.

8. Verfahren nach einem der Ansprüche 1 bis 7, **dadurch gekennzeichnet, dass** Nickelhydroxidpulver dispergiert enthaltende Sole aus der Elektrolysezelle ausgeschleust und in eine nachgeschaltete Elektrolysezelle eingeleitet wird, wobei die weitere Elektrolysezelle Anoden aus Kobaltmetall aufweist.

9. Verfahren nach Anspruch 8, **dadurch gekennzeichnet, dass** der Kobaltmetall enthaltenden Elektrolysezelle Kobalthydroxid-beschichtetes Nickelhydroxidpulver enthaltende Sole ausgeschleust, das Nickelhydroxidpulver abgetrennt und die Sole in die Elektrolysezelle mit Nickelelektroden zurückgeführt wird.

10. Verfahren nach Anspruch 6, **dadurch gekennzeichnet, dass** die Dotierungselementionen durch anodische Oxidationen der entsprechenden Metalle erzeugt werden.

## Claims

1. Process for preparing spherical nickel hydroxide by anodic dissolution of a nickel electrode and precipitation of nickel hydroxide in a completely mixed electrolysis cell, **characterized in that** an electrolysis liquor containing from 20 to 50 g/l of chloride ions and from 1 to 7 g/l of ammonia and having a pH of from 9.5 to 11.5 and a temperature of from 45 to 60°C is used and is pumped through the electrolysis cell.

2. Process according to Claim 1, **characterized in that** the electrolysis liquor is brought to a pH of from 10 to 10.5 by addition of alkali metal hydroxide or hydrochloric acid before it is introduced into the electrolysis cell.

3. Process according to Claim 1 or 2, **characterized in that** the circulation velocity of the liquor is at least 20 cm/s.

4. Process according to any of Claims 1 to 3, **characterized in that** the molar ratio of chloride ions to ammonia is from 2 to 10.

5. Process according to any of Claims 1 to 4, **characterized in that** the mean residence time of the electrolysis liquor in the cell is from 1 to 5 hours.

6. Process according to any of Claims 1 to 5, **characterized in that** one or more dopant metal ions from the group consisting of Co, Zn, Mg, Cu, Cr, Fe, Sc, Y, La, lanthanides, B, Ga, Mn, Cd, and Al are introduced continuously into the electrolysis.

7. Process according to any of Claims 1 to 6, **characterized in that** the liquor containing dispersed nickel hydroxide powder is discharged from the cell, the nickel hydroxide powder is separated off and the liquor is recirculated to the electrolysis cell.

8. Process according to any of Claims 1 to 7, **characterized in that** the liquor containing dispersed nickel hydroxide powder is discharged from the electrolysis cell and fed into a downstream electrolysis cell having anodes made of cobalt metal.

9. Process according to Claim 8, **characterized in that** liquor containing nickel hydroxide powder coated with cobalt hydroxide is discharged from the electrolysis cell containing cobalt metal, the nickel hydroxide powder is separated off and the liquor is recirculated to the electrolysis cell having nickel electrodes.

10. Process according to Claim 6, **characterized in that** the dopant element ions are produced by anodic oxidation of the corresponding metals.

## Revendications

1. Procédé de préparation d'hydroxyde de nickel sphérique par dissolution anodique d'une électrode de nickel et précipitation d'hydroxyde de nickel dans une cellule d'électrolyse complètement intimement mélangée, **caractérisé en ce qu'**on utilise une saumure d'électrolyse avec une quantité de 20 à 50 g/l d'ions chlorure et 1 à 7 g/l d'ammoniac avec une valeur de pH de 9,5 à 11,5 et une température de 45 à 60°C, la saumure d'électrolyse étant repompée à travers la cellule d'électrolyse.

2. Procédé selon la revendication 1, **caractérisé en ce que** la saumure d'électrolyse avant l'introduction dans la cellule d'électrolyse est ajustée par addition d'hydroxyde alcalin respectivement d'acide chlorhydrique à un pH de 10 à 10,5.

3. Procédé selon la revendication 1 ou 2, **caractérisé en ce que** la vitesse de circulation de la saumure est d'au moins 20 cm/s.

4. Procédé selon l'une des revendications 1 à 3, **caractérisé en ce que** le rapport molaire des ions chlorure à l'ammoniac est de 2 à 10.

5. Procédé selon l'une des revendications 1 à 4, **caractérisé en ce que** le temps de séjour moyen de la saumure d'électrolyse dans la cellule est de 1 à 5 secondes.

6. Procédé selon l'une des revendications 1 à 5, **caractérisé en ce que** l'électrolyse est alimentée en continu en un ou plusieurs ions métalliques de dopage du groupe de Co, Zn, Mg, Cu, Cr, Fe, Sc, Y, La, les lanthanides, B, Ga, Mn, Cd et Al.

7. Procédé selon l'une des revendications 1 à 6, **caractérisé en ce qu'**on écluse en dehors de la cellule de la saumure contenant de la poudre d'hydroxyde de nickel, on sépare la poudre d'hydroxyde de nickel et on renvoie la saumure dans la cellule d'électrolyse.

8. Procédé selon l'une des revendications 1 à 7, **caractérisé en ce que** la saumure contenant de la poudre d'hydroxyde de nickel dispersée est éclusée en dehors de la cellule d'électrolyse et est amenée dans une cellule d'électrolyse placée en aval, les anodes de l'autre cellule d'électrolyse étant en cobalt métallique.

9. Procédé selon la revendication 8, **caractérisé en ce qu'**on écluse en dehors de la cellule d'électrolyse contenant du cobalt métallique de la saumure contenant la poudre d'hydroxyde de nickel recouverte d'hydroxyde de cobalt, on sépare la poudre d'hydroxyde de nickel et on renvoie la saumure dans la cellule d'électrolyse avec des électrodes de nickel.

10. Procédé selon la revendication 6, **caractérisé en ce que** les éléments de dopage sont obtenus par oxydation anodique des métaux correspondants.
